# FASCICULE DE BREVET EUROPEEN

(11) **EP 2 915 743 B1**
(45) Date de publication et mention de la délivrance du brevet: **29.11.2017**
(21) Numéro de dépôt: 14305298.3
(22) Date de dépôt: 03.03.2014
(51) Int. Cl.: B64C 11/20, B64C 27/473, F01D 5/28, B64D 45/00

(54) **Nappe de protection de bords d'attaque d'éléments de voilures d'aéronefs**
Vorderkantenschutz von Flugzeugflügeln
Sheet for protecting the leading edges of aircraft wings

(43) Date de publication de la demande: 09.09.2015
(73) Titulaire: Airbus, 31700 Blagnac (FR); Airbus Helicopters, 13725 Marignane Cedex (FR)
(72) Inventeur: Aliaga, Daniel, 92152 Suresnes Cedex (FR); Guillou, Marie-Paule, 92152 Suresnes Cedex (FR); Campazzi, Elisa, 92152 Suresnes Cedex (FR); Navarre, Thomas, 75019 Paris (FR)
(74) Mandataire: Ipside

(56) Documents cités:
- EP-A1- 2 143 637
- EP-A1- 2 196 393
- FR-A1- 2 639 608
- US-A1- 2004 118 978

## Description

### Domaine de l'invention

La présente invention concerne dispositif de protection pour structures aéronautiques telles que les bords d'attaque d'éléments de voilure et en particulier les bords d'attaque des pales d'hélicoptères.

Elle a pour objet principal une nappe de protection de bords d'attaque d'éléments de voilures d'aéronefs et notamment une nappe de protection adhésive métallique/polymère, conservant le profil aérodynamique des pièces protégées et offrant une protection de ce profil notamment en terme de résistance à l'érosion à la fois contre les agressions de particules solides: érosion sable et liquides: érosion pluie.

### Arrière plan technologique

L'érosion est un problème majeur sur les aéronefs surtout pour les bords d'attaque des éléments de voilure. Les systèmes de protection connus pour ces zones se divisent en deux types:
Les revêtements métalliques: coiffes en titane, acier ou autres alliages métalliques type Ni/Co présentent une bonne résistance à l'érosion par la pluie, mais sont rapidement érodés par le sable.

Les revêtements organiques de haute ductilité, sous forme de films adhésifs à base d'élastomère polyuréthane essentiellement, présentent une bonne résistance à l'érosion par le sable mais leur durabilité reste peu satisfaisante. Ces films sont utilisés d'une part en protection temporaire sur la coiffe métallique des pales pour des hélicoptères soumis à l'érosion sable et d'autre part en protection de plus longue durée à proximité de l'emplanture des pales. Lorsqu'il ne sont pas utilisés près de l'emplanture, Ils ne résistent toutefois pas à des conditions de pluie.

Il s'avère notamment que si un aéronef équipé avec des films de protection contre l'érosion sable traverse un orage, ces films sont totalement détériorés en environ 15 minutes.

Le problème principal est donc l'absence de solution efficace de protection contre l'érosion sable qui soit capable de résister suffisamment à l'érosion pluie pour ne pas être changée trop souvent or de plus en plus d'utilisateurs demandent de pouvoir voler en conditions tous terrains et tout temps.

Une protection combinant la résistance à l'érosion sable et l'érosion pluie permettrait notamment aux appareils militaires d'être adaptés à des missions dans des environnements contraignants et notamment cumulant les problématiques des environnements désertiques et tropicaux.

### Brève description de l'invention

La présente invention a pour objectif de proposer un dispositif de protection sable aisé à mettre en oeuvre et qui résiste à la pluie.

La solution proposée par la présente invention comporte un dispositif de protection d'élément de voilure constitué d'un complexe comprenant un film polymère, un feuillard métallique déposé sur une partie du film polymère et un moyen de collage du film polymère sur ledit élément de voilure, ledit film polymère formant un élément de protection contre une érosion sable et le feuillard métallique formant un élément de protection contre une érosion eau de l'élément de voilure sur lequel se colle le dispositif.

Le complexe est formé en creux en sorte d'épouser le profil d'un bord d'attaque d'élément de voilure. Le formage est notamment un thermoformage et le polymère choisi en conséquence.

L'élément de voilure comportant des zones d'incidence faible et des zones d'incidence forte, le film polymère est conformé en sorte de recouvrir une ou plusieurs zones d'incidence faible de l'élément de voilure, le feuillard métallique étant conformé pour recouvrir une zone de forte incidence dudit élément de voilure.

Selon un premier mode de réalisation, le feuillard métallique est collé sur le film polymère.

Selon un deuxième mode de réalisation, le feuillard métallique est soudé sur le film polymère.

Selon un troisième mode de réalisation, le feuillard métallique est incrusté dans le film polymère.

Avantageusement, le feuillard métallique est incrusté par application à chaud sur le film polymère.

Selon un quatrième mode de réalisation, le feuillard métallique comporte une base à coller sur l'élément de voilure, des feuilles du film polymère se positionnant de part et d'autre du feuillard métallique.

Selon un cinquième mode de réalisation, le film polymère est constitué d'une feuille inférieure sur laquelle est posé le feuillard métallique et de deux feuilles supérieures solidarisées avec la feuille inférieure de part et d'autre du feuillard métallique.

Avantageusement, un vernis de scellement recouvre une zone d'interface entre le feuillard métallique et le film polymère.

Préférablement, les bords du feuillard métallique prolongés par le film polymère sont des bords biseautés.

L'invention concerne en outre un système de protection d'élément de voilure comportant un dispositif de l'invention pour lequel le dispositif de protection est accompagné d'un gabarit de montage et forme avec ce gabarit un kit adaptable hors usine.

L'invention concerne par ailleurs une pale d'hélicoptère recouverte d'un dispositif de l'invention pour laquelle le feuillard métallique recouvre un bord d'attaque de la pale tandis que le film polymère recouvre une partie d'intrado et une partie d'extrado de la pale autour du bord d'attaque.

### Brève description des dessins

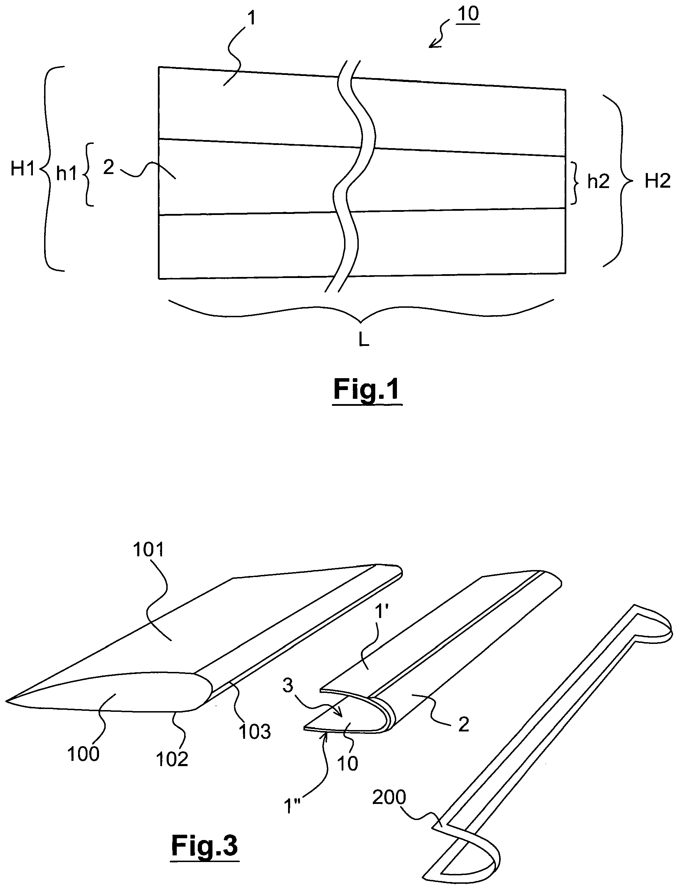

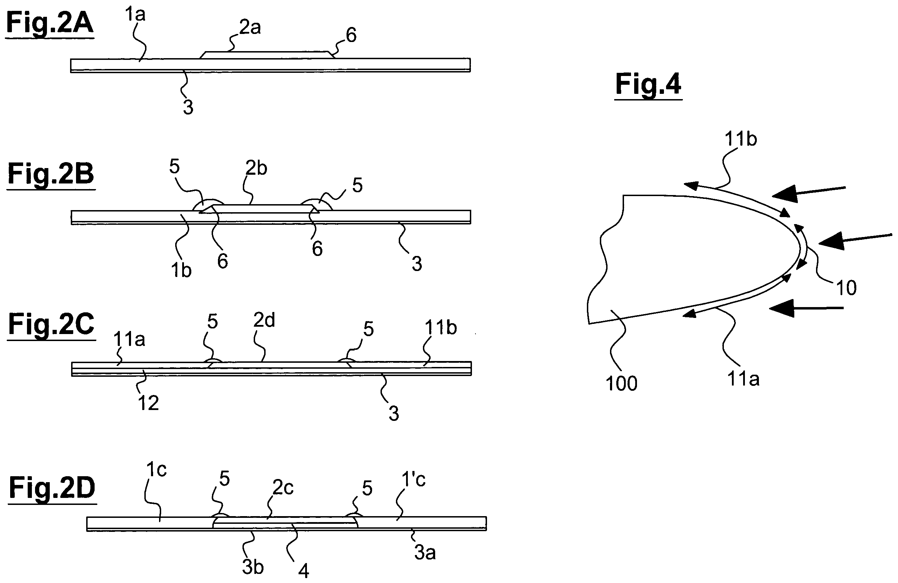

D'autres caractéristiques et avantages de l'invention seront apparents à la lecture de la description qui suit d'un exemple non limitatif de réalisation de l'invention en référence aux dessins qui représentent:
en figure 1: une vue de dessus d'un exemple de réalisation d'un dispositif de l'invention;
aux figures 2A à 2D: des vues de face de variantes de réalisation de dispositifs de l'invention;
en figure 3: une vue en perspective d'un exemple de réalisation de l'invention s'appliquant sur une pale d'hélicoptère;
en figure 4: une vue schématique en coupe d'un bord d'attaque d'une pale.

### Description détaillée de modes de réalisation de l'invention

Comme évoqué plus haut, les films polyuréthane utilisés aujourd'hui en protection à proximité de l'emplanture des pales ou comme protection temporaire contre l'érosion sable présentent l'inconvénient de se détériorer très rapidement sous la pluie.

Le système actuellement utilisé pour les protections temporaire des pales équipées en érosion sable sans système de dégivrage est un film adhésif polyuréthane de largeur de 610 à 1220 mm et de longueur adaptée à la longueur de la pale, ayant une masse surfacique de 432 à 590g/m2 et positionné sur le bord d'attaque des pales.

La présente invention propose une solution capable de retarder la dégradation due à l'érosion eau des films plastiques utilisés pour l'érosion sable et la figure 1 représente un dispositif de protection sable et pluie d'élément de voilure selon l'invention vu de dessus.

Le dispositif comprend un film polymère 1 de protection contre l'érosion sable destiné à couvrir une ou plusieurs zones d'incidence faible de l'élément de voilure et un feuillard métallique 2 de protection à l'érosion eau couvrant une zone de forte incidence dudit élément de voilure.

La solution décrite dans la présente invention est une nappe hybride feuillard métallique/film polymère. L'idée est d'avoir le film polymère seul au droit des zones soumises à l'érosion sable, zones de faible incidence et de protéger ce film par un feuillard métallique mince au droit des zones soumises à l'érosion eau, zones de forte incidence. C'est en effet au droit de ces zones que s'amorcent les décollements et les dommages qui dégradent rapidement la protection temporaire sable.

La figure 4 représente un bord d'attaque d'une pale 100 avec la zone d'incidence normale au profil 10 ou de forte incidence qui est une zone d'érosion pluie et les zones de faible incidence 11a, 11b qui sont les zones d'érosion sable.

L'utilisation de films adhésifs présentant des propriétés spécifiques répondant aux besoins sur des zones localisées, permet d'apporter de nouvelles performances ou d'augmenter celles existantes tout en offrant une solution durable par le remplacement facile du film.

Le complexe comportant un film polymère 1 et un feuillard métallique 2 est selon la figure 1 conçu pour suivre le profil d'une pale et dans cette optique, le film comporte selon l'exemple représenté une largeur H1 côté emplanture plus importante que sa largeur H2 côté bout de pale. De même le feuillard métallique 2 voit selon cet exemple sa largeur h se réduire de h1 à h2 de la même façon.

Le complexe est de longueur L au moins suffisante pour recouvrir une longueur de pale équivalente à la longueur de pale recouverte du film de l'art antérieur.

Pour la réalisation du complexe différentes solutions sont possibles et elles comprennent d'une manière générale un empilement comprenant un adhésif, un film polymère notamment PEEK, PEI ou préférablement PU; d'épaisseur entre 50 et 350 µm et préférablement de l'ordre de 200 µm; un feuillard métallique, aluminium, titane, préférablement acier et plus particulièrement acier nuance AISI 301 d'épaisseur entre 20 et 150 µm, préférablement 50 µm.

Selon la figure 2A le feuillard 2a se trouve à la surface du film 1a et un adhésif peut être utilisé pour coller le feuillard métallique sur le film polymère si nécessaire.

Cet adhésif peut être évité pour certains films polymère ou dans le cas de procédés comportant par exemple un dépôt à chaud du feuillard métallique sur le film polymère, qui résulte en un léger enfoncement du feuillard dans le film comme représenté en figure 2B où le feuillard 2b s'enfonce dans le film 1b.

Des variantes de fabrication sont possible.

La figure 2C prévoit une feuillard 2d collé sur un film 12 inférieur alors que deux films 11a et 11b sont collés sur le premier de part et d'autre du feuillard. Dans ce mode de réalisation, le feuillard et les feuilles de film sont conçus pour éviter une surépaisseur du feuillard par rapport au film.

Dans ces trois solutions, un film adhésif 3 recouvre la face inférieure du film polymère (face opposée à celle recevant le feuillard métallique).

La figure 2D représente une réalisation pour laquelle deux feuilles de film 1c, 1c' sont posées de part et d'autre d'un feuillard métallique déposé sur un substrat 4 les feuilles et le substrat juxtaposés étant collés sur l'élément de voilure.

Dans ce cas il est possible que la surface inférieure des deux éléments de films polymère 11a, 11b soit recouverte d'un premier film adhésif 3a alors que le substrat 4 soit recouvert d'un second film adhésif 3b.

Dans tous les cas un vernis de scellement 5 peut recouvrir la zone d'interface entre le feuillard métallique et le film polymère pour éviter que le vent, les gouttes d'eau ou le sable s'engouffrent dans l'interface entre le feuillard métallique et le film et risquent de dégrader ou de décoller ce dernier.

De même pour éviter d'avoir une rupture de pente au niveau de cet interface, les bords longitudinaux du feuillard métallique sont selon les exemples représentés des bords biseautés 6 dont l'angle de découpe permet de lisser la transition entre le feuillard et le film.

Le feuillard métallique est dimensionné pour ne couvrir que la zone la plus soumise à l'érosion eau, c'est-à-dire l'extrémité du bord d'attaque sur laquelle l'incidence des gouttes de pluie est proche de la normale à la tangente du bord d'attaque. Pour ce faire le feuillard recouvre une bande de 2 à 10 cm de largeur autour de la pointe du bord d'attaque.

Dans les zones d'intrado et d'extrado de la pale prolongeant le bord d'attaque, le feuillard métallique est remplacé par le film polymère car dans ces zones d'incidence faible l'eau ne représente plus un danger pour les surfaces recouvertes du film alors que l'érosion due aux grains de sable qui rayent la surface des pales devient prédominante. La solution mixte métal film polymère de l'invention est conçue pour s'adapter aux types d'agressions prédominantes selon les zones concernées des pales ou éléments de voilure.

L'invention peut s'appliquer sur tous les hélicoptères et peut couvrir différentes zones des pales, notamment les zones recouvertes par une coiffe métallique sur les hélicoptères soumis à l'érosion sable ou les zones plus près de l'emplanture de la pale qui sont aujourd'hui protégées par un film polymère.

La figure 3 représente une réalisation du dispositif de l'invention pour lequel le complexe 10 est semi rigide et préformé pour épouser le profil de la pale 100 de sorte que les parties 1' et 1" du film polymère se positionnent respectivement sur l'extrado 101 et l'intrado 102 de la pale 100 alors que la partie de film polymère recouverte par le feuillard 2 se positionne sur le bord d'attaque 103 éventuellement métallique de la pale.

Le formage du film polymère peut notamment pour les matériaux choisis être réalisé par thermoformage dans un moule chauffant. Le feuillard métallique est dans un tel cas préférablement mis en place avant l'opération de thermoformage et se retrouve alors en contact avec une forme convexe du moule.

La face du film en contact avec l'élément de voilure peut aussi dans ce cas être recouverte d'un moyen de collage 3 du dispositif sur l'élément de voilure telle qu'un film adhésif.

Dans un tel cas, le dispositif de protection est éventuellement accompagné d'un gabarit de montage 200 que l'on positionne sur la pale, dans le cas d'une pale d'hélicoptère par exemple, pour délimiter l'emplacement du dispositif, le dispositif formant alors avec ce gabarit un kit adaptable hors usine, par exemple en extérieur sur un terrain d'opérations de l'hélicoptère.

La solution décrite dans la présente invention, pouvant se présenter sous-forme de kit, est facile à poser et à remplacer par les utilisateurs, a un coût compétitif, est capable de prolonger la durée de vie de la protection temporaire, même si l'aéronef est amené à voler en conditions métrologiques mixtes

Par ailleurs, l'avantage d'une solution adhésive, disponible également en kit, est de réduire le temps d'immobilisation de l'aéronef et surtout de permettre de réaliser la maintenance de cette solution dans des environnements difficiles notamment des hangars sommaires ou en plein air.

Les matériaux associés pour réaliser la solution hybride «feuillard métallique/film polymère» sont :
un feuillard métallique: Il s'agit d'un acier inoxydable de type AISI 301 ou 1.4310 qui est fortement écroui et approvisionné à l'état de feuillard d'une épaisseur de 20 à 100 µm mais préférablement voisine de 50 µm pour offrir un bon compromis durabilité/masse;
- un film polymère en une ou plusieurs feuilles: il s'agit d'un film polyuréthane. Le rôle de cette partie de la protection étant essentiellement consacré à protéger contre l'érosion sable, on partira des formulations les plus proches de celle de référence, qu'on sait performante dans ces conditions. Les épaisseurs pourront varier entre 50 et 300 µm mais une épaisseur de l'ordre de 200 µm qui offre aussi un compromis durabilité/masse acceptable sera préférée;
- un adhésif d'environ 50 µm de collage de la nappe sur l'élément de voilure compatible avec les matériaux à assembler et assurant à la fois une bonne stabilité des interfaces et une facilité d'enlèvement de la protection pour son remplacement.

Les résultats actuellement disponibles tels que des tests d'érosion effectués avec des moyens de projection de gouttes d'eau sur un empilement feuillard acier 1.43010 de 50 µm + film PU de 200 µm selon l'invention en regard d'une protection PU actuelle d'une épaisseur de l'ordre de 300 µm mettent en évidence que la protection sable actuelle ne résiste pas à 100 impacts de gouttes d'eau à 180 m/s alors que le complexe de l'invention tiens plus de 10000 impacts à la vitesse de 250 m/s, les deux solutions restant équivalentes pour ce qui concerne la protection sable malgré la diminution d'épaisseur du film polymère qui est permise selon l'invention par l'ajout de la bande métallique.

Dans le cas d'un film thermoformé la fabrication du dispositif comporte:
une étape de découpe du film polymère, une étape de découpe du feuillard, une étape d'application du feuillard sur le film polymère, une étape de positionnement de l'ensemble film polymère + feuillard dans un moule chauffant de thermoformage et une étape de thermoformage du dispositif à la forme de l'élément de voilure à recouvrir puis une étape d'application d'un film de colle sur la face du film polymère destiné à venir s'appliquer sur l'élément de voilure et enfin une étape de conditionnement.

Pour l'application du feuillard sur le film polymère, il peut être prévu soit une étape de collage soit une étape de chauffe à plat soit éventuellement d'utiliser l'étape de chauffe de thermoformage pour simultanément coller et incruster le feuillard dans le film polymère.

Un aspect important de l'invention est que le dispositif reste au moins équivalent à la solution antérieure en terme d'efficacité et de masse et qu'elle est plus durable ce qui réduit le nombre d'opérations de remplacement de la protection à conditions de vol équivalentes.

## Revendications

1. Dispositif de protection d'élément de voilure (100) **caractérisé en ce qu'**il est constitué d'un complexe (10) comprenant un film polymère (1), un feuillard métallique (2) déposé sur une partie du film polymère et un moyen (3) de collage du film polymère sur ledit élément de voilure, ledit film polymère formant un élément de protection contre une érosion sable et ledit feuillard métallique formant un élément de protection contre une érosion eau de l'élément de voilure sur lequel se colle le dispositif; **en ce que** le complexe (10) est formé en creux en sorte d'épouser le profil d'un bord d'attaque d'élément de voilure et **en ce que**, l'élément de voilure (100) comportant des zones d'incidence faible et des zones d'incidence forte, le film polymère est conformé en sorte de recouvrir une ou plusieurs zones d'incidence faible de l'élément de voilure, le feuillard métallique est conformé pour recouvrir une zone de forte incidence dudit élément de voilure.

2. Dispositif de protection d'élément de voilure selon la revendication 1 pour lequel le feuillard métallique (2a) est collé sur le film polymère (1a).

3. Dispositif de protection d'élément de voilure selon la revendication 1 pour lequel le feuillard métallique (2a) est soudé sur le film polymère (1a).

4. Dispositif de protection d'élément de voilure selon la revendication 1 lequel le feuillard métallique (2b) est incrusté dans le film polymère (1b).

5. Dispositif de protection d'élément de voilure selon la revendication 4 pour lequel le feuillard métallique (2b) est incrusté par application à chaud sur le film polymère (1b).

6. Dispositif de protection d'élément de voilure selon la revendication 1 pour lequel le feuillard métallique (2c) comporte une base (4) à coller sur l'élément de voilure, des feuilles du film polymère (1c) se positionnant de part et d'autre du feuillard métallique.

7. Dispositif de protection d'élément de voilure selon la revendication 1 pour lequel le film polymère est constitué d'une feuille inférieure (12) sur laquelle est posé le feuillard métallique (2d) et de deux feuilles supérieures (11a, 11b) solidarisées avec la feuille inférieure de part et d'autre du feuillard métallique.

8. Dispositif de protection selon l'une quelconque des revendications 2 à 7 pour lequel un vernis de scellement (5) recouvre une zone d'interface entre le feuillard métallique et le film polymère.

9. Dispositif de protection selon l'une quelconque des revendications précédentes pour lequel les bords du feuillard métallique prolongés par le film polymère sont des bords biseautés (6).

10. Système de protection d'élément de voilure comportant un dispositif selon l'une quelconque des revendications précédentes pour lequel le dispositif de protection est accompagné d'un gabarit de montage et forme avec ce gabarit un kit adaptable hors usine.

11. Elément de voilure recouvert d'un dispositif selon l'une quelconque des revendications 1 à 9 pour laquelle le feuillard métallique recouvre un bord d'attaque (103) dudit élément tandis que le film polymère recouvre une partie d'intrado (102) et une partie d'extrado (101) dudit élément autour du bord d'attaque.

12. Pale d'hélicoptère (100) recouverte d'un dispositif selon l'une quelconque des revendications 1 à 9 pour laquelle le feuillard métallique recouvre un bord d'attaque (103) de la pale tandis que le film polymère recouvre une partie d'intrado (102) et une partie d'extrado (101) de la pale autour du bord d'attaque.

## Patentansprüche

1. Schutzvorrichtung für Flügelelement (100), **dadurch gekennzeichnet, dass** sie aus einem Komplex (10) gebildet ist, der eine Polymerfolie (1), ein Metallband (2), das auf einem Teilbereich der Polymerfolie aufgebracht ist, und ein Mittel (3) zum Kleben der Polymerfolie auf das Flügelelement umfasst, wobei die Polymerfolie ein Schutzelement gegen eine Sanderosion und das Metallband ein Schutzelement gegen eine Wassererosion des Flügelelements bildet, auf welches die Vorrichtung geklebt wird; dadurch, dass der Komplex (10) hohlförmig ausgebildet ist, um sich an das Profil einer Vorderkante eines Flügelelements anzupassen, und, da das Flügelelement (100) Bereiche geringen Einfalls und Bereiche starken Einfalls umfasst, dadurch, dass die Polymerfolie ausgebildet ist, einen oder mehrere Bereiche geringen Einfalls des Flügelelements zu bedecken, das Metallband ausgebildet ist, einen Bereich starken Einfalls des Flügelelements zu bedecken.

2. Schutzvorrichtung für Flügelelement nach Anspruch 1, wobei das Metallband (2a) auf die Polymerfolie (1a) geklebt ist.

3. Schutzvorrichtung für Flügelelement nach Anspruch 1, wobei das Metallband (2a) auf die Polymerfolie (1a) geschweißt ist.

4. Schutzvorrichtung für Flügelelement nach Anspruch 1, wobei das Metallband (2b) in die Polymerfolie (1b) eingebracht ist.

5. Schutzvorrichtung für Flügelelement nach Anspruch 4, wobei das Metallband (2b) durch Heißaufbringung auf die Polymerfolie (1b) aufgebracht ist.

6. Schutzvorrichtung für Flügelelement nach Anspruch 1, wobei das Metallband (2c) eine Grundlage (4) zum Kleben auf das Flügelelement aufweist, wobei Blätter der Polymerfolie (1c) beiderseits des Metallbands positioniert werden.

7. Schutzvorrichtung für Flügelelement nach Anspruch 1, wobei die Polymerfolie aus einem unteren Blatt (12), auf welches das Metallband (2d) aufgebracht ist, und zwei oberen Blättern (11a, 11b) gebildet ist, die beiderseits des Metallbands fest mit dem unteren Blatt verbunden sind.

8. Schutzvorrichtung nach einem der Ansprüche 2 bis 7, wobei ein Versiegelungslack (5) einen Schnittstellenbereich zwischen dem Metallband und der Polymerfolie bedeckt.

9. Schutzvorrichtung nach einem der vorhergehenden Ansprüche, wobei die Ränder des Metallbands, die von der Polymerfolie verlängert sind, angeschrägte Ränder (6) sind.

10. Schutzsystem für Flügelelement, umfassend eine Vorrichtung nach einem der vorhergehenden Ansprüche, wobei der Schutzvorrichtung eine Montageschablone beiliegt, mit der die Schutzvorrichtung ein Kit bildet, das außerhalb des Werks angepasst werden kann.

11. Flügelelement, das mit einer Vorrichtung nach einem der Ansprüche 1 bis 9 bedeckt ist, wobei das Metallband eine Vorderkante (103) des Elements bedeckt, während die Polymerfolie einen Teilbereich der Innenseite (102) und einen Teilbereich der Außenseite (101) des Elements um die Vorderkante bedeckt.

12. Hubschrauberblatt (100), das mit einer Vorrichtung nach einem der Ansprüche 1 bis 9 bedeckt ist, wobei das Metallband eine Vorderkante (103) des Blatts bedeckt, während die Polymerfolie einen Teilbereich der Innenseite (102) und einen Teilbereich der Außenseite (101) des Blatts um die Vorderkante bedeckt.

## Claims

1. Wing element protection device (100), **characterized in that** it consists of a complex (10) comprising a polymer film (1), a metal strip (2) deposited on a portion of the polymer film and a means (3) for bonding the polymer film to said wing element, said polymer film forming an element for protection against sand erosion and said metal strip forming an element for protection against water erosion of the wing element to which the device is bonded; **in that** the complex (10) is formed in counter-relief so as to fit the profile of a wing element leading edge and **in that**, since the wing element (100) comprises regions of low incidence and regions of high incidence, the polymer film is shaped so as to cover one or more regions of low incidence of the wing element, the metal strip is shaped in order to cover a region of high incidence of said wing element.

2. Wing element protection device according to Claim 1, for which the metal strip (2a) is bonded to the polymer film (1a).

3. Wing element protection device according to Claim 1, for which the metal strip (2a) is welded to the polymer film (1a).

4. Wing element protection device according to Claim 1, for which the metal strip (2b) is embedded in the polymer film (1b).

5. Wing element protection device according to Claim 4, for which the metal strip (2b) is embedded by hot application to the polymer film (1b).

6. Wing element protection device according to Claim 1, for which the metal strip (2c) comprises a base (4) to be bonded to the wing element, sheets of the polymer film (1c) being positioned on either side of the metal strip.

7. Wing element protection device according to Claim 1, for which the polymer film consists of a lower sheet (12) on which the metal strip (2d) is laid and of two upper sheets (11a, 11b) joined together with the lower sheet on either side of the metal strip.

8. Protection device according to any one of Claims 2 to 7, for which a sealing varnish (5) covers an interface region between the metal strip and the polymer film.

9. Protection device according to any one of the preceding claims, for which the edges of the metal strip extended by the polymer film are bevelled edges (6).

10. Wing element protection system comprising a device according to any one of the preceding claims, for which the protection device is accompanied by an assembly jig and forms, with this jig, a kit that can be adapted out OF factory.

11. Wing element covered with a device according to any one of Claims 1 to 9, for which the metal strip covers a leading edge (103) of said element while the polymer film covers a lower surface portion (102) and an upper surface portion (101) of said element around the leading edge.

12. Helicopter blade (100) covered with a device according to any one of Claims 1 to 9, for which the metal strip covers a leading edge (103) of the blade while the polymer film covers a lower surface portion (102) and an upper surface portion (101) of the blade around the leading edge.
